# FASCICULE DE BREVET EUROPEEN

(11) **EP 1 328 817 B1**
(45) Date de publication et mention de la délivrance du brevet: **21.03.2007**
(21) Numéro de dépôt: 01976434.9
(22) Date de dépôt: 11.10.2001
(51) Int. Cl.: G01N 35/10

(54) **DISPOSITIF DE PIPETAGE AUTOMATIQUE AVEC RINCAGE**
PIPETTIERVORRICHTUNG MIT SPÜLUNG
AUTOMATIC PIPETTING DEVICE WITH RINSING

(30) Priorité: 24.10.2000 FR 0013775
(43) Date de publication de la demande: 23.07.2003
(73) Titulaire: Junior Instruments, 92230 Gennevilliers (FR)
(72) Inventeur: ABOU-SALEH, Khaled, F-92400 Courbevoie (FR); ROUSSEAU, Alain, F-75004 Paris (FR)
(74) Mandataire: de Saint-Palais, Arnaud Marie
(86) Numéro de dépôt international: PCT/FR2001/003183
(87) Numéro de publication internationale: WO 2002/035243

(56) Documents cités:
- EP-A- 0 771 977
- FR-A- 2 126 496
- GB-A- 1 357 448
- US-A- 3 572 130
- US-A- 3 810 720
- US-A- 4 199 013
- US-A- 4 818 492
- US-A- 5 474 744

## Description

La présente invention concerne un dispositif de pipetage automatique avec rinçage de la pipette, ce dispositif permettant la reconstitution des réactifs et étant utilisable dans un automate d'analyse.

Elle a plus particulièrement pour objet un dispositif de ce type présentant une structure modulaire lui permettant de s'adapter aisément selon la précision et les spécifications requises, tant en ce qui concerne les quantités de produits prélevées dans la pipette que les quantités de liquide de rinçage utilisées.

D'une manière générale, on sait qu'il a déjà été proposé de nombreux dispositifs permettant d'exécuter des cycles de pipetage et de rinçage, notamment au sein d'un dispositif d'analyse automatique.

Habituellement, ces dispositifs font intervenir au moins deux motorisations, l'une servant à actionner une seringue de dosage, tandis que l'autre sert à l'entraînement en rotation d'une pompe servant à l'injection du liquide de rinçage. En effet, la seringue de dosage qui est prévue pour de faibles quantités de liquide n'a pas une capacité suffisante pour effectuer un rinçage.

Cette solution s'avère donc relativement complexe et coûteuse. Elle fait intervenir une pompe dont la motorisation est coûteuse énergétiquement et dont la fragilité et la durée de vie sont moins bonnes que celles de la seringue. La fiabilité de l'ensemble n'est donc pas à la hauteur de ce que l'on pourrait attendre. Or, ce type de dispositif doit pouvoir fonctionner, sans aucune maintenance, pendant au moins sept ans au rythme de l'automate sur lequel il est utilisé. Dans le cas d'un automate tel que celui décrit dans le brevet FR 2 779 827, ce rythme est de 60 tests par heure pendant au moins deux heures par jour et ce, 220 jours par an (soit environ 185 000 tests).

Par le brevet US 5 474 744 on a également proposé un dispositif de pipetage automatique avec rinçage utilisant deux seringues actionnées par deux motorisations séparées. Néanmoins, cette solution demeure relativement coûteuse et pose de gros problèmes de synchronisation. Il en est de même en ce qui concerne un dispositif de pipetage décrit dans le brevet US A 4 818 492.

Par ailleurs, un inconvénient de ces solutions consiste en ce qu'elles ne permettent d'assurer des pipetages que dans une seule gamme de précision qui dépend des dimensions de la seringue, sans qu'il soit possible de les adapter à d'autres gammes de précision.

L'invention a donc tout d'abord pour but la réalisation d'un dispositif de pipetage de structure simple n'utilisant qu'une seule motorisation, à la fois pour le pipetage et pour le rinçage, dont la fiabilité et la durée de vie est du même ordre que celles de la seringue de pipetage de manière à obtenir une fiabilité optimale de l'ensemble, avec possibilité de changement de gamme de précision.

L'invention a également pour but un dispositif de pipetage dont la structure et la cinématique permettent une modularisation des éléments de pipetage et de rinçage de manière à pouvoir obtenir une très grande souplesse d'utilisation.

En vue de parvenir à ces résultats, le dispositif de pipetage selon l'invention comprend au moins deux unités de pompage de dimensions différentes, ces deux unités de pompage comprenant chacune une cavité cylindrique à l'intérieur de laquelle coulisse, avec étanchéité, un ensemble tige/piston qui délimite avec ladite cavité une chambre de travail dont le volume varie en fonction de la position axiale de l'ensemble tige/piston. La chambre de travail de chacune des unités de pompage étant, par ailleurs, connectée à un circuit comprenant un conduit débouchant dans une réserve de liquide de rinçage, ledit circuit comprend successivement deux électrovannes et un tuyau, éventuellement souple, raccordé à des moyens de pipetage, par exemple une aiguille.

Selon l'invention, ce dispositif est caractérisé en ce que les extrémités des tiges/pistons ressortant des deux cavités sont accouplées à un organe d'actionnement commun entraîné en translation par une motorisation commune, les susdites unités de pompage consistent chacun en un module comprenant un corps comportant une cavité cylindrique et présentant deux faces d'assemblage parallèles dans lesquelles débouche un conduit traversant en communication avec la susdite cavité cylindrique et dont une portion est équipée d'une électrovanne, les orifices dudit conduit étant équipées de moyens de connexion permettant d'assurer un raccordement étanche avec un orifice correspondant d'un autre module, lorsque les deux modules sont assemblés l'un à l'autre par leurs faces d'assemblage et fixés dans cette position à l'aide de moyens de fixation, lesdits orifices pouvant êtres raccordés par ailleurs soit au conduit d'admission de liquide de rinçage, soit au conduit raccordé aux moyens de pipetage, chacun des modules comprend un conduit en communication avec la cavité cylindrique et qui débouche à l'extérieur par un orifice constituant une sortie parallèle, ledit conduit étant équipée d'une électrovanne.

La plus grande chambre de travail se trouve alors connectée dans la partie de circuit assurant la jonction entre les deux électrovannes, tandis que l'autre chambre de travail est connectée dans la partie de circuit située entre la deuxième électrovanne et les moyens de pipetage.

Bien entendu, le dispositif selon l'invention peut en outre comprendre des moyens de commande de la motorisation et des électrovannes conçues de manière à assurer un cycle comprenant au moins :
- une phase de pipetage dans laquelle la première électrovanne est ouverte, la deuxième électrovanne est fermée et la motorisation entraîne en translation les deux ensembles tige/piston de manière à accroître le volume des deux chambres de travail, l'accroissement de volume de la petite chambre engendrant l'aspiration du liquide à analyser ou du réactif dans les moyens de pipetage, tandis que l'accroissement de volume de la grande chambre provoquant l'aspiration du liquide de rinçage à l'intérieur de cette chambre,
- une phase de refoulement dans laquelle les deux électrovannes sont dans le même état que lors de la phase de pipetage, la motorisation agissant alors de manière à provoquer une réduction des volumes desdites chambres de travail et un refoulement du liquide à analyser ou du réactif,
- une phase de rinçage dans laquelle la première électrovanne est fermée tandis que la deuxième est ouverte ; la motorisation entraînant en translation les deux ensembles tige/piston de manière à réduire le volume des deux chambres de travail en expulsant le liquide de rinçage qu'elles contiennent vers les moyens de pipetage.

Bien entendu, le dispositif selon l'invention pourra comprendre un nombre n d'unités de pompage dont les ensembles tige/piston sont connectés à un même organe d'actionnement et dont les chambres de travail sont respectivement connectées à un circuit comprenant un nombre n d'électrovannes en série respectivement connectées dans les parties de circuit assurant les jonctions entre les électrovannes pour ce qui concernent les n-1 premières vannes, la chambre de travail de la n^{ième} vanne, de petite dimension, étant quant à elle connectée à la partie de circuit comprise entre cette n^{ième} électrovanne et les moyens de pipetage. Les susdits moyens de commande sont alors conçus de manière à ce que dans chacune des susdites phases un nombre déterminé i d'électrovannes se trouvent à l'état fermé tandis que les autres vannes, soit un nombre n-i, se trouvent à l'état ouvert.

Des modes d'exécution de l'invention seront décrits ci-après, à titre d'exemples non limitatifs, avec référence aux dessins annexés dans lesquels :
La figure 1 est un schéma de principe d'un dispositif de pipetage utilisant deux seringues.
La figure 2 est un chronogramme d'une séquence complète de fonctionnement du dispositif de pipetage représenté figure 1.
La figure 3 est une vue en coupe schématique d'un mode d'exécution du dispositif représenté figure 1.
La figure 4 est une vue en perspective éclatée du mode d'exécution illustré sur la figure 3.
La figure 5 est une vue en perspective du dispositif de la figure 4 à l'état assemblé.
La figure 6 est une coupe schématique d'un ensemble de pompage modulaire utilisable dans un dispositif de pipetage selon l'invention.
La figure 7 est une représentation schématique de l'ensemble de pompage de la figure 6.

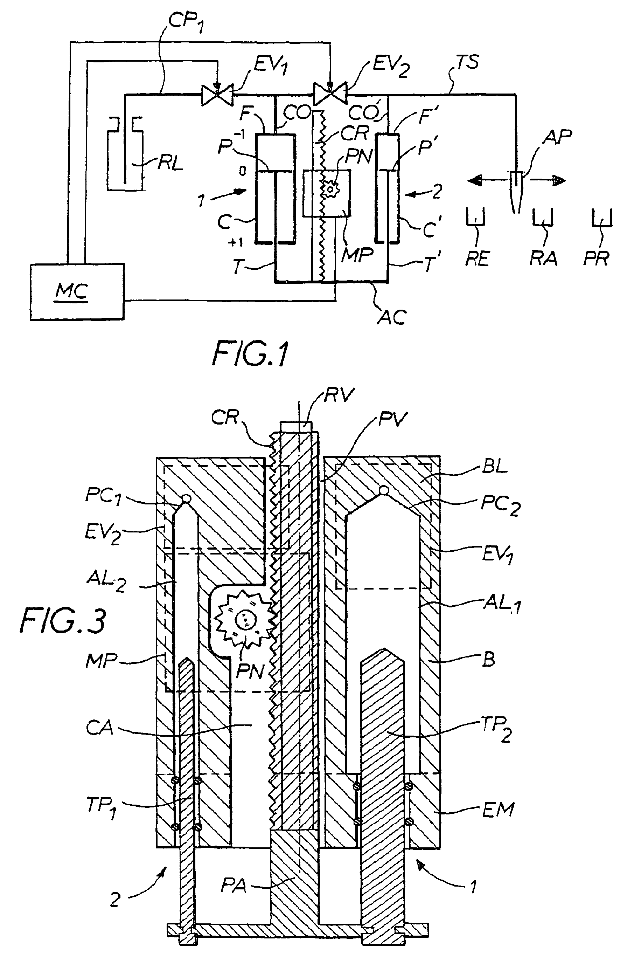

Dans l'exemple représenté sur la figure 1, le dispositif de pipetage comprend deux unités de pompage 1, 2 comprenant chacune un corps cylindrique C, C' dans lequel se déplace un piston P, P' qui délimite avec un fond F, F' une chambre de travail de volume variable.

Ce piston est solidaire d'une tige T, T ressortant du corps, du côté opposé au fond F, et qui est couplée à un mécanisme d'actionnement en translation faisant intervenir :
- une pièce d'accouplement AC sur laquelle les tiges T et T' viennent se fixer (il existe un jeu entre T, T' et AC pour palier les défauts de parallélisme),
- une crémaillère CR solidaire de la pièce d'accouplement AC qui s'étend parallèlement à l'axe des corps cylindriques C, C',
- un pignon PN entraîné par un moteur pas à pas MP qui engrène avec la crémaillère CR.

Le fond de chacun des corps C, C' est muni d'un conduit CO, CO' faisant communiquer la chambre de travail correspondante avec un circuit comprenant en série, un conduit CP₁ débouchant dans une réserve de liquide de rinçage RL, deux électrovannes successives EV₁, EV₂ et un tuyau souple TS raccordé à une aiguille de pipetage mobile AP. Cette aiguille AP est actionnée de manière à pouvoir s'engager dans divers récipients tels que, par exemple, comme représenté, une réserve RE contenant un échantillon ou un réactif, un récipient d'analyse RA et un puits de rinçage PR.

D'une façon plus précise, le conduit CO est raccordé au circuit dans l'intervalle des électrovannes EV₁, EV₂. Le conduit CO' débouche quant à lui dans la portion de circuit assurant la jonction entre l'électrovanne EV₂ et l'aiguille AP.

La commande des électrovannes EV₁, EV₂ et du moteur MP est assurée par un microcontrôleur MC. Le capteur optique fournit seulement la position "zéro" du système.

Dans cet exemple, l'état de la vanne EV₁ est toujours à l'opposé de celui de la vanne EV₂, c'est-à-dire que lorsque la vanne EV₁ est ouverte, la vanne EV₂ est fermée et inversement.

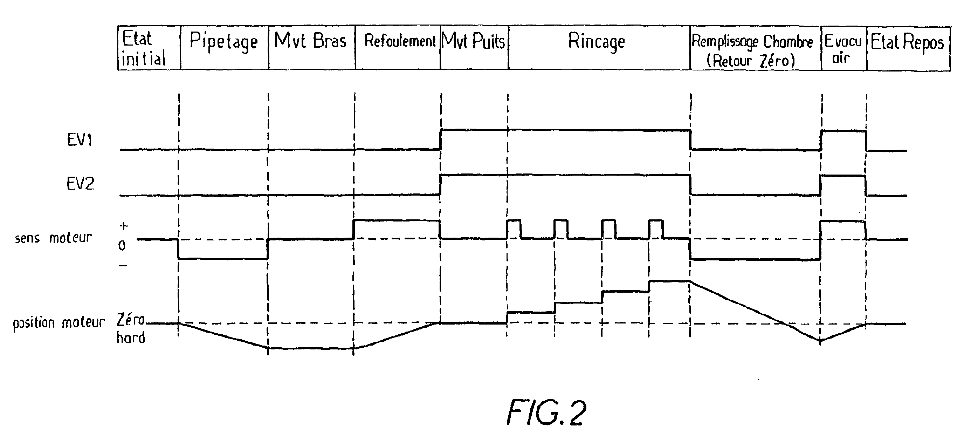

Le fonctionnement du dispositif de pipetage précédemment mentionné sera décrit ci-après en regard du chronogramme de la figure 2.

Selon ce chronogramme, à l'état initial, l'aiguille AP est engagée dans la réserve RE, les vannes EV₁, EV₂ se trouvant respectivement en position ouverte et en position fermée. Le moteur MP est à l'arrêt, les pistons étant en position de repos (position 0). Les deux chambres de travail des unités de pompage sont remplies de liquide de rinçage.

La phase de pipetage s'effectue alors grâce à une rotation du moteur MP (sens négatif) de manière à entraîner les deux pistons P, P' vers le bas. Au cours de ce déplacement, le piston P' crée une aspiration du liquide contenu dans la réserve RE, à l'intérieur de l'aiguille AP et une partie du tuyau souple TS, tandis que le piston P aspire le liquide de rinçage contenu dans la réserve RE.

Au cours de la phase suivante, l'aiguille PA est déplacée par exemple pour venir se disposer au-dessus du récipient d'analyse RA.

Une fois dans cette position, le dispositif peut amorcer la phase de refoulement au cours de laquelle le moteur MP tourne en sens inverse pour remonter les pistons PP' à leurs positions de repos (position 0). Au cours de cette action, les électrovannes demeurent dans le même état que précédemment et le piston P' refoule le liquide préalablement prélevé dans l'aiguille AP, à l'intérieur du récipient RA, tandis que le piston P refoule le liquide de rinçage à l'intérieur de la réserve.

Cette phase de refoulement étant terminée, l'aiguille AP est amenée au droit du puits de rinçage PR pour permettre l'exécution d'une phase de rinçage

Au cours de cette nouvelle phase, l'état des électrovannes se trouve inversé, l'électrovanne EV₁ est fermée, l'électrovanne EV2 étant ouverte, tandis que le moteur MP est actionné de manière à refouler le liquide de rinçage contenu dans les deux seringues en direction de l'aiguille de pipetage.

En fait ce refoulement s'effectue en plusieurs paliers correspondant chacun à un ou plusieurs pas du moteur MP.

Une fois la phase de rinçage effectuée, le dispositif entame une phase de remplissage au cours de laquelle l'électrovanne EV₁ est ouverte, tandis que l'électrovanne EV₂ est fermée. Le moteur MP est alors actionné de manière à déplacer les pistons P, P' vers le bas pour provoquer l'aspiration requise. Au cours de cette phase de remplissage, l'unité de pompage 2 provoque une aspiration d'air par l'aiguille AP.

En conséquence, le retour du dispositif à l'état initial implique une phase d'évacuation d'air au cours de laquelle les électrovannes EV₁, EV₂ sont respectivement fermées et ouvertes et le moteur MP est actionné de manière à obtenir un refoulement du liquide de rinçage contenu dans les unités 1 et 2 par l'aiguille.

Lorsque l'air est évacué, le dispositif retourne à l'état initial dans lequel les électrovannes EV₁, EV₂ sont respectivement à l'état ouvert et à l'état fermé et où les pistons occupent la position de repos 0.

Avantageusement, le dispositif précédemment décrit pourra être dimensionné de manière à pouvoir être compatible avec les automates d'analyse actuellement utilisés.

A titre d'exemple, dans ce dispositif utilisé sur un automate tel que celui décrit dans FR 2 779 827 :
- le volume minimum à pipeter pourra être égal à 5µl, le volume maximum étant égal à 250 µl, (ce volume étant déterminé en réglant le nombre de pas du moteur lors des phases d'aspiration et de recouvrement),
- pour la fonction reconstitution des réactifs, le volume maximum à pipeter pourra être égal à 8 ml,
- le débit de démarrage pourra être de 24,4µl/s ou de 73,2 µl/s, le débit haut étant de l'ordre de 366 µl/s,
- le dispositif pourra être à même d'effectuer 10 coups de rinçage successifs avec un volume de 150 µl avec une durée de 100 ms par coup de rinçage. La pression des paliers de rinçage pourra être de 3 bars,
- le moteur MP utilisé peut consister en un motoréducteur pas à pas, comprenant 200 pas par tour,
- le diamètre du piston du corps de l'unité de pipetage 1 pourra être égal à 14 mm, tandis que le diamètre du piston du corps de l'unité de pipetage 2 pourra être de 3 mm,
- la longueur des deux alésages pourra être de 55 mm.

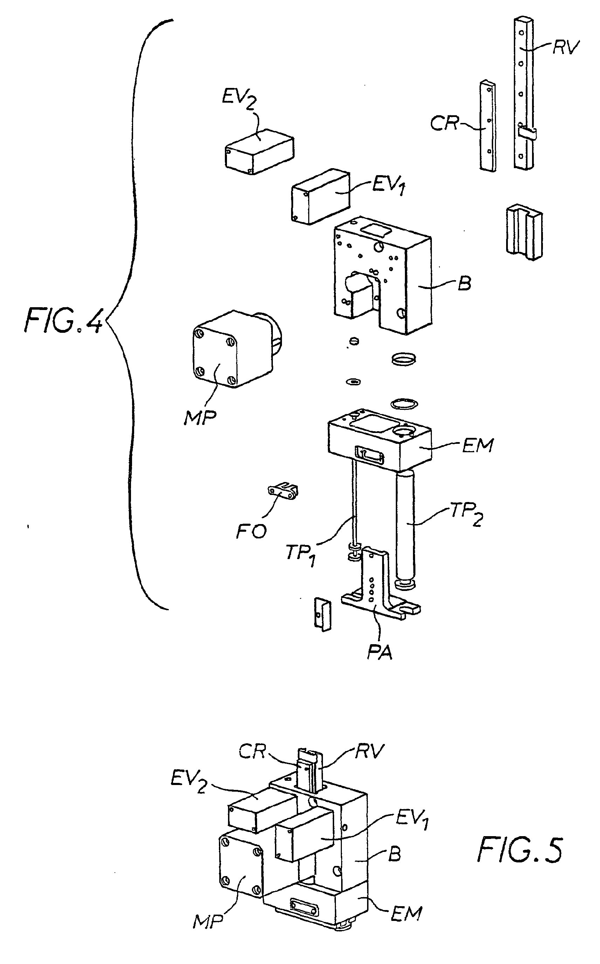

Dans l'exemple utile à la compréhension de l'invention illustré sur les figures 3, 4 et 5, les corps des deux unités de pipetage 1, 2 sont intégrés dans un même bloc BL en matière plastique, par exemple en Plexiglas (marque déposée) ; de forme sensiblement parallélépipédique.

Ce corps comprend deux alésages AL₁ et AL₂ axés parallèlement à l'axe vertical de symétrie du bloc qui débouchent à l'extérieur au niveau de la face inférieure du bloc. Dans leurs partie supérieure, ces deux alésages se terminent par deux portions coniques PC₁, PC₂ respectives situées à une distance prédéterminée de la face supérieure.

Dans le volume compris entre les deux alésages AL₁, AL₂ est prévue une cavité CA débouchant sur la face inférieure et sur la face antérieure, ainsi qu'un passage vertical PV s'étendant entre la face supérieure de la cavité CA et la face supérieure du bloc.

Sur la face inférieure du bloc est fixée une embase EM comprenant deux passages verticaux traversants dans lesquels sont montés coulissant, avec étanchéité, deux tige/piston respectives TP₁, TP₂, par exemple en acier inoxydable, qui s'engagent respectivement dans les alésages AL₁, AL₂, l'étanchéité coulissante étant ici obtenue à l'aide de joints d'étanchéité dynamique.

Les extrémités supérieures de ces tige/piston sont coniques tandis que leurs extrémités inférieures comprennent deux gorges respectives permettant leur fixation démontables aux extrémités de la branche horizontale d'une pièce d'actionnement PA en forme de T inversé.

La branche verticale de cette pièce d'actionnement PA est fixée à l'extrémité inférieure d'un rail vertical RV, mobile en translation verticale, qui passe dans la cavité grâce à un orifice prévu dans l'embase puis par le passage PV.

Ce rail RV porte une crémaillère CR sur laquelle engrène un pignon PN actionné par un motoréducteur (bloc en points interrompus MP) et qui se trouve logé dans la cavité.

Par ailleurs, deux électrovannes EV₁, EV₂ sont montées sur la face antérieure du corps, en communication avec des conduits réalisés dans le bloc B, conformément au circuit représenté sur la figure 1.

Une fourche optique FO est en outre prévue pour effectuer la détection de la position "zéro" du rail RV.

Le fonctionnement de ce dispositif est identique à celui précédemment décrit et ne sera donc pas exposé à nouveau.

Néanmoins, il s'avère que cette solution est particulièrement avantageuse en raison de sa compacité, sa facilité d'intégration, de son aptitude à éliminer les bulles grâce aux formes coniques, de sa précision qui dépend de celle des tige/piston TP₁, TP₂ qui sont usinables à très haute précision et de sa fiabilité.

En particulier, l'élimination des bulles est due à la fois aux formes coniques des tige/piston TP₁, TP₂ et des alésages cylindriques AL₁, AL₂ ainsi qu'à l'état de surface de ces éléments. Par ailleurs, le passage des bulles est facilité grâce au fait que la forme conique PC₁ de l'alésage cylindrique AL₂ de plus petit diamètre communique directement avec le conduit raccordé aux moyens de pipetage AP.

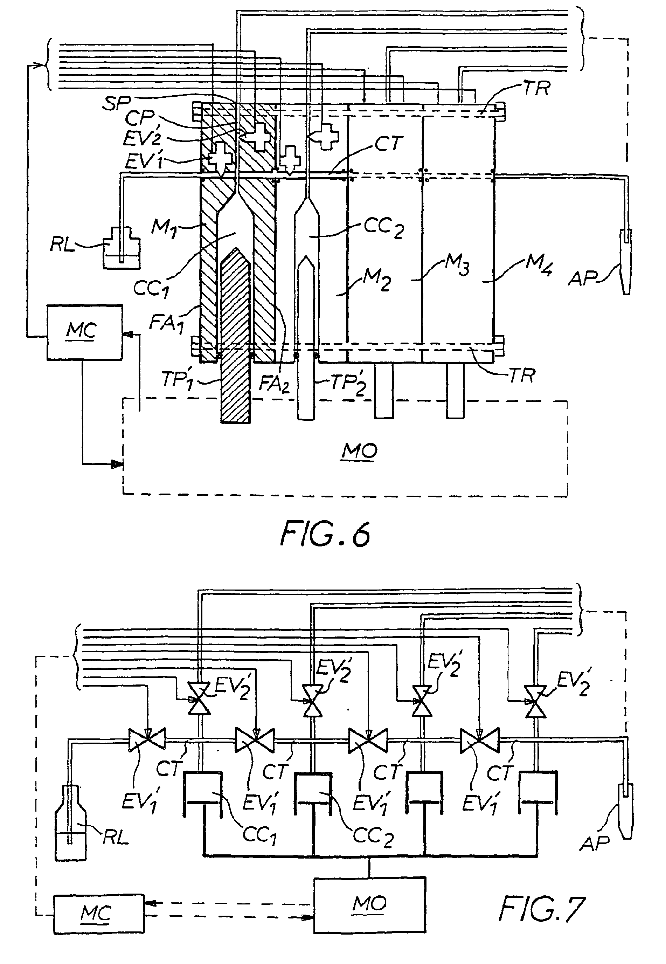

L'invention propose un dispositif modulaire mettant en oeuvre des modules de pompage pouvant s'assembler les uns aux autres de la façon indiquée sur les figures 6 et 7.

Dans cet exemple, chaque module M₁ à M₄ comprend une cavité cylindrique CC₁, CC₂ dans laquelle peut coulisser avec étanchéité une tige/piston TP'₁, TP'₂ actionnée par une motorisation (bloc MO) commune à toutes les tige/piston TP'₁, TP'₂.

Ce module comprend un corps présentant deux faces d'assemblage parallèle FA₁, FA₂ dans lesquelles débouchent un conduit traversant CT, en communication avec la cavité cylindrique CC₁ et dont une portion est obturable par un pointeau actionné par un électroaimant (l'ensemble constituant une électrovanne EV'₁).

Au niveau des faces d'assemblage, les orifices de ce conduit CT sont équipés de moyens de connexion permettant d'assurer un raccordement étanche des tronçons de conduits CT de plusieurs modules lorsque ces derniers sont assemblés les uns aux autres par leurs faces d'assemblage et fixés dans cette position, par exemple par des tirants TR.

D'une façon analogue à la précédente, le conduit obtenu par le raccordement des différents conduits traversants CT est raccordé d'un côté au récipient de liquide de rinçage RL et, de l'autre côté, à une aiguille de pipetage AP.

Les électrovannes EV' et la motorisation MO sont quant à elles connectées à un circuit de commande à microprocesseur MC.

Par ailleurs, chacun des modules M₁ à M₄ comprend en outre un conduit CP en communication avec la cavité cylindrique CC₁ et qui débouche sur la face supérieure du module par un orifice constituant une sortie parallèle SP. Ce conduit CP est obturable par un pointeau commandé par un électroaimant, l'ensemble formant une électrovanne EV'₂ similaire aux électrovannes EV'₁ et commandée par le circuit de commande.

Ces sorties parallèles SP peuvent être connectées à l'aiguille de pipetage AP par l'intermédiaire d'un collecteur commun.

Il est clair que cette structure modulaire bénéficie d'une très grande souplesse et peut s'adapter à de très nombreuses situations, en faisant varier le nombre des modules en choisissant des modules présentant des cavités de diamètre approprié, en effectuant des regroupements de modules dont les électrovannes présentent les mêmes états, en sélectionnant les sorties les plus appropriées aux fonctions que l'on veut exécuter etc... Bien entendu, cette sélection peut être assurée par un programme implémenté par le circuit de commande MC.

## Revendications

1. Dispositif de pipetage automatique avec rinçage, ce dispositif permettant la reconstitution de réactifs et étant utilisable dans un automate d'analyse, ce dispositif comportant au moins deux unités de pompage (1, 2) de capacité différente, comportant chacune une cavité cylindrique (AL₁, AL₂) à l'intérieur de laquelle coulisse avec étanchéité un ensemble tige/piston (TP₁, TP₂) qui délimite avec ladite cavité une chambre de travail dont le volume varie en fonction de la position axiale de l'ensemble tige/piston (TP₁, TP₂), la chambre de travail de chacune des unités de pompage (1, 2) étant connectée à un circuit comprenant un conduit débouchant dans une réserve de liquide de rinçage (RL), ledit circuit comprenant successivement deux électrovannes (EV₁, EV₂) et un tuyau (TS) raccordé à des moyens de pipetage (AP), la plus grande chambre de travail étant connectée dans la partie dudit circuit assurant la jonction entre les deux électrovannes (EV₁, EV₂) tandis que l'autre chambre de travail est connectée dans la partie de circuit située entre la deuxième électrovanne (EV₂) et les moyens de pipetage (AP),
**caractérisé en ce que** :
- les extrémités des ensembles tiges-pistons (TP₁, TP₂) ressortant des deux cavités sont fixées à un organe d'actionnement commun entraîné en translation par une motorisation commune (MC),
- les susdites unités de pompage consistent chacune en un module (M₁ à M₄) comprenant un corps comportant une cavité cylindrique (AL₁, AL₂) et présentant deux faces d'assemblage parallèles (FA₁, FA₂) dans lesquelles débouche un conduit traversant (CT) en communication avec la susdite cavité cylindrique (CC₁, CC₂) et dont une portion est équipée d'une électrovanne (EV'₁), les orifices dudit conduit étant équipées de moyens de connexion permettant d'assurer un raccordement étanche avec un orifice correspondant d'un autre module (M₁ à M₄), lorsque les deux modules sont assemblés l'un à l'autre par leurs faces d'assemblage et fixés dans cette position à l'aide de moyens de fixation (TR), lesdits orifices pouvant êtres raccordés par ailleurs soit au conduit d'admission de liquide de rinçage, soit au conduit raccordé aux moyens de pipetage (AP),
- chacun des modules (M₁ à M₄) comprend un conduit (CP) en communication avec la cavité cylindrique (CC₁) et qui débouche à l'extérieur par un orifice constituant une sortie parallèle (SP), ledit conduit (CC₁) étant équipée d'une électrovanne (EV'₂).

2. Dispositif selon la revendication 1,
**caractérisé en ce qu'**il comprend des moyens de commande (MC) de la motorisation (MP) et des électrovannes (EV₁, EV₂) conçues de manière à obtenir un cycle comprenant au moins :
- une phase de pipetage dans laquelle la première électrovanne (EV₁) est ouverte, la deuxième électrovanne (EV₂) est fermée et la motorisation (MP) entraîne en translation les deux ensembles tige/piston (TP₁, TP₂) de manière à accroître le volume de la petite chambre de travail et à engendrer une aspiration d'un liquide à prélever par les moyens de pipetage (AP) et un accroissement du volume de la grande chambre provoquant l'aspiration du liquide de rinçage à l'intérieur de cette grande chambre,
- une phase de refoulement dans laquelle les deux électrovannes (EV₁, EV₂) sont dans le même état que lors de la phase de pipetage, la motorisation (MP) agissant alors de manière à provoquer une réduction de volume desdites chambres de travail et un refoulement du liquide précédemment prélevé, et
- une phase de rinçage dans laquelle la première électrovanne (EV₁) est fermée tandis que la deuxième électrovanne (EV₂) est ouverte, la motorisation (MP) entraînant en translation les deux ensembles tige/piston (TP₁, TP₂) de manière à réduire le volume des deux chambres de travail en expulsant le liquide de rinçage qu'elles contiennent vers les moyens de pipetage (AP).

3. Dispositif selon la revendication 2,
**caractérisé en ce que**, à la suite de la phase de rinçage, le susdit cycle comprend une phase de remplissage au cours de laquelle la deuxième électrovanne (EV₂) est fermée tandis que la première électrovanne (EV₁) est ouverte, le moteur (MP) étant actionné de manière à créer un accroissement du volume desdites chambres de travail, et une phase d'évacuation d'air au cours de laquelle les susdites première et deuxième électrovannes (EV₁, EV₂) sont respectivement fermée et ouverte tandis que la motorisation (MP) est actionnée de manière à obtenir un refoulement du liquide de rinçage en direction des moyens de pipetage (AP).

4. Dispositif selon l'une des revendications précédentes,
**caractérisé en ce que** la susdite motorisation comprend un moteur (MP) entraînant un pignon (PN) qui engrène avec une crémaillère (CR) solidaire du susdit organe d'actionnement.

5. Dispositif selon l'une des revendications précédentes,
**caractérisé en ce que** les extrémités supérieures des cavités cylindriques (AL₁, AL₂) et des ensembles tige/piston (TP₁, TP₂) sont coniques.

6. Dispositif selon la revendication 5,
**caractérisé en ce que** la forme conique (PC₁) de la cavité cylindrique (AL₁) la plus petite communique directement avec le conduit raccordé aux moyens de pipetage (AP).

7. Dispositif selon l'une des revendications précédentes,
**caractérisé en ce que** lesdites électrovannes (EV₁, EV₂-EV'₁, EV'₂) et ladite motorisation (MP) sont commandées par un processeur (MC) recevant des informations relatives à la position des ensembles tige/piston (TP₁, TP₂-TP'₁, TP'₂).

8. Dispositif selon la revendication 7,
**caractérisé en ce que** les susdites informations sont obtenues au moyen d'une fourche optique associée à la susdite crémaillère (CR).

## Claims

1. Automatic pipetting device with rinsing, this device being capable of reconstituting reagents and being useable in an analysis robot, this device comprising at least two pumping units (1, 2) with different capacities, each comprising a cylindrical cavity (AL₁, AL₂) inside which slides a sealed rod / piston assembly (TP₁, TP₂) that delimits a working chamber with said cavity, the volume of which varies as a function of the axial position of the rod / piston assembly (TP₁, TP₂), the working chamber of each of the pumping units (1, 2) being connected to a circuit comprising a duct opening up into a reserve of rinsing liquid (RL), said circuit comprising two solenoid valves (EV₁, EV₂) in sequence, and a pipe (TS) connected to pipetting means (AP), the largest working chamber being connected in the part of said circuit forming the junction between the two solenoid valves (EV₁, EV₂) while the other working chamber is connected in the part of the circuit located between the second solenoid valve (EV₂) and the pipetting means (AP), **characterised in that**:
- the ends of the rod - piston assemblies (TP₁, TP₂) leading out of the two cavities are fixed to a common actuation device driven in translation by a common motor drive (MC),
- aforesaid pumping units each consists of a module (M₁ to M₄) comprising a body comprising a cylindrical cavity (AL₁, AL₂) with two parallel assembly faces (FA₁, FA₂) into which a through duct (CT) opens up in communication with aforesaid cylindrical cavity (CC₁, CC₂) and a portion of which is equipped with a solenoid valve (EV'₁), the orifices of said duct being provided with connection means used to provide a sealed connection with a corresponding orifice in another module (M₁ to M₄), when the two modules are assembled to each other through their assembly faces and fixed in this position by means of attachment means (TR), said orifices can also be connected either to the rinsing liquid inlet duct, or to the duct connected to the pipetting means (AP),
- each of the modules (M₁ to M₄) comprises a duct (CP) in communication with the cylindrical cavity (CC₁) and that opens up to the outside through an orifice forming a parallel output (SP), said duct (CC₁) being provided with a solenoid valve (EV'₂).

2. Device according to claim 1, **characterised in that** it comprises means (MC) of controlling the motor drive (MP) and solenoid valves (EV₁, EV₂) designed to obtain a cycle comprising at least:
- a pipetting phase in which the first solenoid valve (EV₁) is open, the second solenoid valve (EV₂) is closed and the motor drive (MP) drives the two rod / piston assemblies (TP₁, TP₂) in translation so as to increase the volume of the small working chamber and to intake a liquid to be drawn in through the pipetting means (AP) and to increase the volume of the large chamber causing intake of the rinsing liquid inside this large chamber,
- a discharge phase in which the two solenoid valves (EV₁, EV₂) are in the same state as in the pipetting phase, the motor drive (MP) then acting so as to reduce the volume of said working chambers and to discharge the liquid previously drawn in, and
- a rinsing phase in which the first solenoid valve (EV₁) is closed while the second solenoid valve (EV₂) is open, the motor drive (MP) driving the two rod / piston assemblies (TP₁, TP₂) in translation so as to reduce the volume of the two working chambers by expelling the rinsing liquid contained in them towards the pipetting means (AP).

3. Device according to claim 2, **characterised in that**, after the rinsing phase, aforesaid cycle comprises a filling phase during which the second solenoid valve (EV₂) is closed while the first solenoid valve (EV₁) is open, the motor (MP) being actuated so as to increase the volume of aforesaid working chambers, and an air evacuation phase during which said first and second solenoid valves (EV₁, EV₂) are closed and open respectively while the motor drive (MP) is actuated so as to discharge the rinsing liquid towards the pipetting means (AP).

4. Device according to one of the previous claims, **characterised in that** aforesaid motor drive comprises a motor (MP) driving a gear (PN) that engages with a rack (CR) fixed to aforesaid actuation device.

5. Device according to one of the previous claims, **characterised in that** the upper ends of the cylindrical cavities (AL₁, AL₂) and the rod / piston assemblies (TP₁, TP₂) are conical.

6. Device according to claim 5, **characterised in that** the conical shape (PC₁) of the smallest cylindrical cavity (AL₁) communicates directly with the duct connected to the pipetting means (AP).

7. Device according to one of the previous claims, **characterised in that** said solenoid valves (EV₁, EV₂ - EV'₁, EV'₂) and said motor drive (MP) are controlled by a processor (MC) receiving information about the position of the rod / piston assemblies (TP₁, TP₂-TP'₁, TP'₂).

8. Device according to claim 7, **characterised in that** aforesaid information is obtained using an optical fork associated with aforesaid rack (CR).

## Patentansprüche

1. Automatische Pipettiervorrichtung mit Spülung, wobei diese Vorrichtung die Wiederherstellung von Reagenzien ermöglicht und in einem Analyseautomaten verwendbar ist und wobei diese Vorrichtung mindestens zwei Pumpeinheiten (1, 2) unterschiedlicher Kapazität enthält, von denen jede einen zylindrischen Hohlraum (AL₁, AL₂) aufweist, in welchem eine Stange/Kolben-Einheit (TP₁, TP₂) abdichtend gleitet, die mit dem besagten Hohlraum eine Arbeitskammer begrenzt, deren Volumen sich in Abhängigkeit von der axialen Position der Stange/Kolben-Einheit (TP₁, TP₂) verändert, wobei die Arbeitskammer jeder Pumpeinheit (1, 2) mit einem Kreis verbunden ist, welcher eine Leitung aufweist, die in einen Spülflüssigkeitsvorrat (RL) einmündet und wobei der besagte Kreis aufeinanderfolgend zwei Elektromagnetventile (EV₁, EV₂) aufweist sowie ein an Pipettiermittel (AP) angeschlossenes Rohr (TS) und die größere Arbeitskammer mit dem Teil des besagten Kreises verbunden ist, der die Verbindung zwischen den beiden Elektromagnetventilen (EV₁, EV₂) bildet, während die andere Arbeitskammer mit dem Teil des Kreises verbunden ist, der zwischen dem zweiten Elektromagnetventil (EV₂) und den Pipettiermitteln (AP) liegt,
**dadurch gekennzeichnet, dass**:
- die Enden der aus den beiden Hohlräumen herausgeführten Stange/Kolben-Einheiten (TP₁, TP₂) an einem gemeinsamen Betätigungsorgan befestigt sind, das von einer gemeinsamen Motoreinheit (MC) in Translation angetrieben wird,
- die oben genannten Pumpeinheiten jeweils aus einem Modul (M₁ bis M₄) bestehen, das einen Körper besitzt, der einen zylindrischen Hohlraum (AL₁, AL₂) enthält und zwei parallele Anschlussflächen (FA₁, FA₂) aufweist, in welche eine in Verbindung mit dem oben genannten zylindrischen Hohlraum (CC₁, CC₂) stehende Durchführungsleitung (CT) einmündet und, von der ein Teil mit einem Elektromagnetventil (EV'₁) ausgerüstet ist, wobei die Öffnungen der besagten Leitung mit Verbindungsmitteln versehen sind, welche eine dichtende Verbindung mit einer entsprechenden Öffnung eines anderen Moduls (M₁ bis M₄) ermöglichen, wenn die beiden Module mit ihren Anschlussflächen aneinander angesetzt und in dieser Position mit Hilfe von Befestigungsmitteln (TR) befestigt sind und wobei die besagten Öffnungen andererseits entweder mit der Zuführungsleitung für Spülflüssigkeit oder mit der an die Pipettiermittel (AP) angeschlossenen Leitung verbunden sein können,
- jedes der Module (M₁ bis M₄) eine Leitung (CP) enthält, die mit dem zylindrischen Hohlraum (CC₁) verbunden ist und die durch eine Öffnung nach außen mündet, welche einen Parallelausgang (SP) darstellt, wobei die besagte Leitung (CC₁) mit einem Elektromagnetventil (EV'₂) ausgerüstet ist.

2. Vorrichtung nach Anspruch 1, **dadurch gekennzeichnet,**
**dass** sie Steuermittel (MC) für die Motoreinheit (MP) und die Elektromagnetventile (EV₁, EV₂) aufweist, die derart ausgebildet sind, dass ein Zyklus erzielt werden kann, der mindestens enthält:
- eine Pipettierphase, in welcher das erste Elektromagnetventil (EV₁) offen ist, das zweite Elektromagnetventil (EV₂) geschlossen ist und die Motoreinheit (MP) die beiden Stange/Kolben-Einheiten (TP₁, TP₂) derart in Translation antreibt, dass sich das Volumen der kleinen Arbeitskammer vergrößert und ein Ansaugen einer von den Pipettiermitteln (AP) aufzunehmenden Flüssigkeit sowie ein Anwachsen des Volumens der großen Kammer erzeugt wird, welches ein Ansaugen von Spülflüssigkeit in das Innere dieser großen Kammer bewirkt,
- eine Verdrängungsphase, in welcher die beiden Elektromagnetventile (EV₁, EV₂) sich in dem gleichen Zustand befinden wie während der Pipettierphase, wobei dann die Motoreinheit (MP) derart wirksam ist, dass bei den besagten Arbeitskammern eine Volumenverkleinerung und eine Verdrängung von vorher aufgenommener Flüssigkeit hervorgerufen wird, und
- eine Spülphase, in welcher das erste Elektromagnetventil (EV₁) geschlossen ist, während das zweite Elektromagnetventil (EV₂) offen ist und die Motoreinheit (MP) die beiden Stange/Kolben-Einheiten (TP₁, TP₂) in Translation derart antreibt, dass das Volumen der beiden Arbeitskammern verkleinert wird und die in ihnen enthaltene Spülflüssigkeit in Richtung auf die Pipettiermittel ausgetrieben wird.

3. Vorrichtung nach Anspruch 2,
**dadurch gekennzeichnet, dass** nach der Spülphase der besagte Zyklus eine Füllphase aufweist, in deren Verlauf das zweite Elektromagnetventil (EV₂) geschlossen ist, während das erste Elektromagnetventil (EV₁) geöffnet ist und der Motor (MP) derart betrieben ist, dass eine Vergrößerung des Volumens der besagten Arbeitskammern bewirkt wird sowie eine Entlüftungsphase, in deren Verlauf die besagten ersten und zweiten Elektromagnetventile (EV₁, EV₂) jeweils geschlossen beziehungsweise geöffnet sind, während die Motoreinheit (MP) derart betätigt wird, dass eine Verdrängung der Spülflüssigkeit in Richtung der Pipettiermittel (AP) erreicht wird.

4. Vorrichtung nach einem der vorhergehenden Ansprüche,
**dadurch gekennzeichnet, dass** die besagte Motoreinheit einen Motor (MP) aufweist, der ein Zahnrad (PN) antreibt, welches in eine kraftschlüssig mit dem besagten Betätigungsorgan verbundene Zahnleiste (CP) eingreift.

5. Vorrichtung nach einem der vorhergehenden Ansprüche,
**dadurch gekennzeichnet, dass** die oberen Enden der zylindrischen Hohlräume (AL₁, AL₂) und der Stange/Kolben-Einheiten (TP₁, TP₂) konisch ausgebildet sind.

6. Vorrichtung nach Anspruch 5,
**dadurch gekennzeichnet, dass** die konische Form (PC₁) des kleineren zylindrischen Hohlraums (AL₁) direkt mit der an die Pipettiermittel (AP) angeschlossenen Leitung verbunden ist.

7. Vorrichtung nach einem der vorhergehenden Ansprüche,
**dadurch gekennzeichnet, dass** die besagten Elektromagnetventile (EV₁, EV₂, EV'₁, EV'₂) und die besagte Motoreinheit (MP) durch einen Prozessor (MC) angesteuert werden, der Informationen bezüglich der Position der Stange/Kolben-Einheiten (TP₁, TP₂-TP'₁, TP'₂) erhält.

8. Vorrichtung nach Anspruch 7,
**dadurch gekennzeichnet, dass** die besagten Informationen mittels einer der besagten Zahnleiste (CR) zugeordneten optischen Gabel erhalten werden.
